# EUROPEAN PATENT SPECIFICATION

(11) **EP 2 777 916 B1**
(45) Date of publication and mention of the grant of the patent: **30.11.2016**
(21) Application number: 13172138.3
(22) Date of filing: 14.06.2013
(51) Int. Cl.: B29C 70/32

(54) **Rolling method for forming a multi-layered composite element and composite element obtained thereby**
Wickelverfahren zum Formen eines mehrschichtigen Verbundwerkstoffs und dadurch hergestelltes Verbundbauteil
Procédé d'enroulement de couches multiples en matière composite et dispositif ainsi obtenu

(30) Priority: 14.03.2013 US 201313828482
(43) Date of publication of application: 17.09.2014
(73) Proprietor: Bell Helicopter Textron Inc., Fort Worth, TX 76101 (US)
(72) Inventor: Gingras, Richard, Montreal, Québec H3L 2K2 (CA); Dumais, Dany, Prevost, Québec J0R 1T0 (CA)
(74) Representative: Lawrence, John

(56) References cited:
- EP-A1- 2 390 087
- EP-A2- 2 116 356
- US-A1- 2012 264 536

## Description

### BACKGROUND

Various types of materials may be used to form structural elements of an aircraft. One such material is composite material. For example, a spar in a horizontal stabilizer of a helicopter might be formed of fiberglass or carbon fiber composites. Typically, such a spar might have a cylindrical shape. Composites may be useful for aircraft due to strength to weight characteristics. Accordingly, there is an ongoing need for improved techniques for forming composite elements. EP2116356 discloses a supporting strut for supporting an intermediate deck of an aircraft fuselage. The strut is a hollow cylindrical rod body, comprising at least one carbon fibre fabric. The rod body may be formed by winding four pieces of prepreg interlaid scrim in a spiral shape.

US2012/0264536 discloses the features of the preamble of claim 1. 15

### SUMMARY

The method according to the invention is defined in claim 1. In some embodiments, the method may further comprise selecting the length of each of the plurality of plies of composite material and selecting the order of laying out the plies to ensure that, during rolling and curing, the joints between plies will not overlap. In some embodiments, the joints between plies may be butt spliced joints. In some embodiments, the method may further comprise applying vacuum to the stacked ply assembly. In some embodiments, curing the rolled stacked ply assembly may comprise inserting the rolled stacked ply assembly into a mold, applying pressure inside the rolled stacked ply assembly (e.g. to press the rolled stacked ply assembly against the mold), and heating the rolled stacked ply assembly. In some embodiments, pressure may be applied inside the rolled stacked ply assembly using one of the following: inflating a bladder within the rolled stacked ply assembly, heating a silicone cylinder within the rolled stacked ply assembly, and heating an aluminum mandrel within the rolled stacked ply assembly. In some embodiments, the method may further comprise removing the mandrel from the rolled stacked ply assembly. In some embodiments, pressure may be applied to the stacked ply assembly during rolling around the mandrel using one of the following: springs pressing rollers onto the mandrel, a weighted carriage applied to one or more of the rollers, and combinations thereof. In some embodiments, the stacked ply assembly may be formed of plies of pre-preg laminate material having a plurality of orientations. In some embodiments, curing the rolled stacked ply assembly may comprise inserting the rolled stacked ply assembly into a female mold, applying pressure inside the rolled stacked ply assembly to press the rolled stacked ply assembly against the mold, and heating the rolled stacked ply assembly; wherein the mold may be a tubular pressure vessel.

In other embodiments of the disclosure, a method of forming multi-layered composite tubing is provided that may comprise: laying a plurality of plies of composite material on a flat surface to form a first detail, with portions of adjacent plies of the first detail overlapping to form butt splicing joints; laying one or more plies of composite material to form a second detail atop the first detail, with portions of any adjacent plies in the second detail overlapping to form butt splicing joints; applying a vacuum to the plurality of plies to form a stacked ply assembly; rolling the stacked ply assembly around a mandrel while applying pressure (e.g. compressive force) to form composite tubing; and curing the composite tubing; wherein the composite tubing has a circumference and the joints between adjacent plies are distributed around the circumference of the composite tubing to prevent overlap. In some embodiments, the method may further comprise selecting the length of each of the plurality of plies of composite material and selecting the order of laying out the plies to ensure that, during rolling and curing, the joints between plies will not overlap. In some embodiments, ply length and order may be selected based on the circumference of the composite tubing being formed and the change in the circumference during rolling (e.g. due to the thickness of the plies) and curing, and thickness of the composite tubing may be approximately uniform. In some embodiments, the plies of composite material may be formed of pre-preg laminate material having fibers within a resin matrix, the plies of composite material each have an orientation based on the fibers within the resin, the plies of the first detail are oriented in one direction, and the plies of the second detail are oriented in another direction, different than the direction of the first detail. In some embodiments, the direction of the first detail and the direction of the second detail may be oriented approximately 45-90 degrees apart. In some embodiments, the method may further comprise laying one or more additional plies of composite material to form a third detail atop the second detail, with portions of any adjacent plies in the third detail overlapping to form butt splicing joints. In some embodiments, the plies of the first detail comprise composite fabric; the second detail and the third detail are each formed of a single continuous composite tape; and/or the one or more plies of the third detail have fibers oriented in a direction different than the first detail and the second detail. In some embodiments, curing the composite tubing may comprise inserting the composite tubing into a mold, applying pressure inside the composite tubing (e.g. to press the composite tubing against the mold), and heating the composite tubing (for example, via standard autoclave cycle). In some embodiments, pressure may be applied inside the composite tubing using one of the following: inflating a bladder within the composite tubing, heating a silicone tube within the composite tubing, and heating an aluminum mandrel within the composite tubing. In some embodiments, pressure may be applied to the stacked ply assembly during rolling around the mandrel using one of the following: springs pressing rollers onto the mandrel, a weighted carriage applied to one or more of the rollers, and combinations thereof. In some embodiments, sufficient pressure may be applied to the stacked ply assembly during rolling to substantially eliminate porosity, and sufficient pressure may be applied inside the composite tubing during curing to consolidate the plies.

### BRIEF DESCRIPTION OF THE DRAWINGS

For a more complete understanding of the present disclosure and the advantages thereof, reference is now made to the following brief description, taken in connection with the accompanying drawings and detailed description:
FIG. 1A illustrates a helicopter comprising a horizontal stabilizer;
FIG. 1B illustrates a horizontal stabilizer;
FIG. 1C illustrates a horizontal stabilizer spar;
FIG. 2 illustrates a plurality of plies of composite material;
FIG. 3 illustrates a stacked ply assembly;
FIGS. 4A-4C illustrates exemplary methods of rolling a stacked ply assembly on a mandrel;
FIG. 5A illustrates an exemplary layup of plies in a stacked ply assembly;
FIG. 5B illustrates another view of an exemplary layup of plies in a stacked ply assembly;
FIG. 5C illustrates a cross-sectional view of a rolled stacked ply assembly;
FIGS. 5D-5E illustrate cross-sectional views of the width of a rolled stacked ply assembly;
FIGS. 6A-6B illustrate embodiments of a tool for rolling the composite material on the mandrel;
FIGS. 7A-7B illustrate a set-up for a curing process;
FIGS. 8A-8B illustrate a set-up for an alternative curing process;
FIG. 9 is a flowchart illustrating a method of forming a multi-layered composite element; and
FIG. 10 is a flowchart illustrating a method of forming multi-layered composite tubing.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

In some cases, it may be desirable to employ embodiment processes or methods for forming multi-layered composite tubing by rolling multiple layers of composite material. Such embodiments may improve the efficiency in manufacturing composite elements. The composite tubing may be used to form a variety of symmetrical or unsymmetrical parts used for the construction of a aircraft, such as a spar tube for a horizontal stabilizer for a helicopter. In some embodiments, the composite material comprises a plurality of plies and/or layers laid on a flat surface. The plies may be laid with portions of adjacent plies overlapping to form butt splicing joints. In some embodiments, the plies form a stacked ply assembly. The stacked ply assembly may be formed of one or more detail in some embodiments. The stacked ply assembly is rolled around a mandrel and then cured.

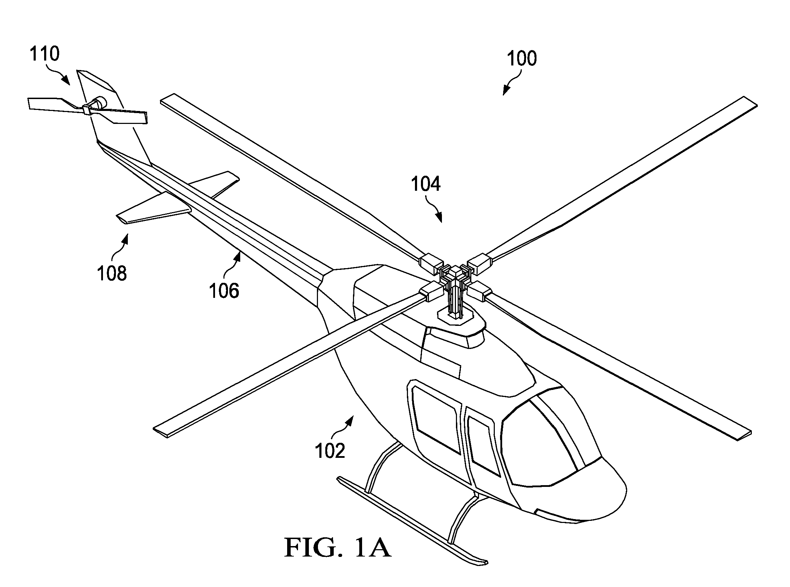

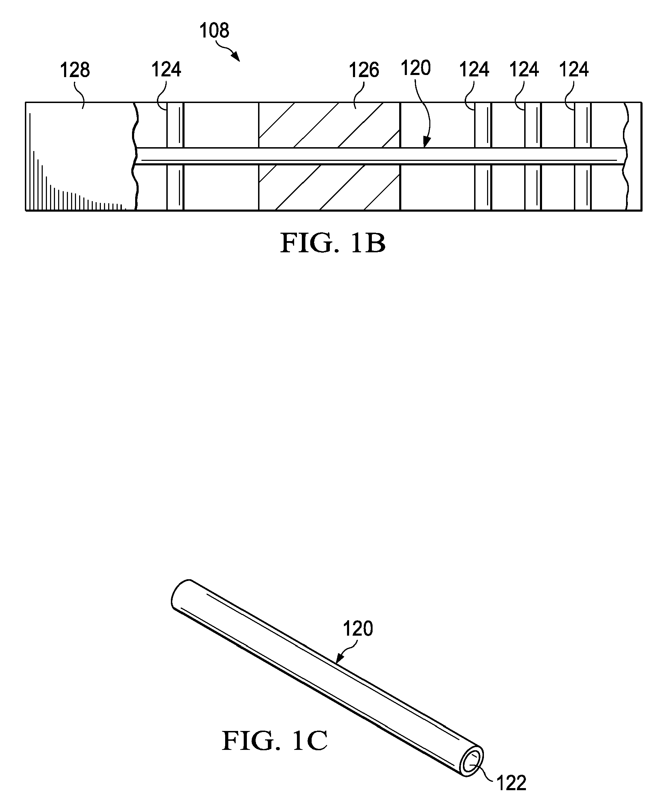

Referring to FIG. 1A, a helicopter 100 according to an embodiment of the disclosure is shown. The helicopter 100 comprises a fuselage 102, main rotor 104, tail 106, horizontal stabilizer 108, and tail rotor 110. Typically, the horizontal stabilizer 108 may be operable to stabilize the helicopter during climb, cruise, and descent. In some embodiments, the horizontal stabilizer 108 may comprise a spar 120, shown in FIG. 1B, wherein the spar 120 may be held within the horizontal stabilizer 108 with a plurality of ribs 124. Additionally, the horizontal stabilizer 108 may comprise a skin 128 covering the ribs 124 and spar 120. The horizontal stabilizer 108 may also comprise some structural connectivity 126, such as connection with the tail 106, wherein the spar 120 may pass through the tail 106. As shown in FIG. 1C, the spar 120 may comprise a hollow tube with opening 122 therethrough. The horizontal stabilizer 108 may attach to the tail 106 of the helicopter 100 and may provide an aerodynamic down-force during forward flight, wherein the spar 120 may be the load-bearing member of the horizontal stabilizer 108. Spars may also be used in wings, horizontal stabilizers, and other components of other aircraft, such as airplanes and tilt-rotor aircrafts. On some occasions, the spar may be made of composite material and may, in some embodiments, be constructed by rolling and curing one or more layers of composite or laminate material.

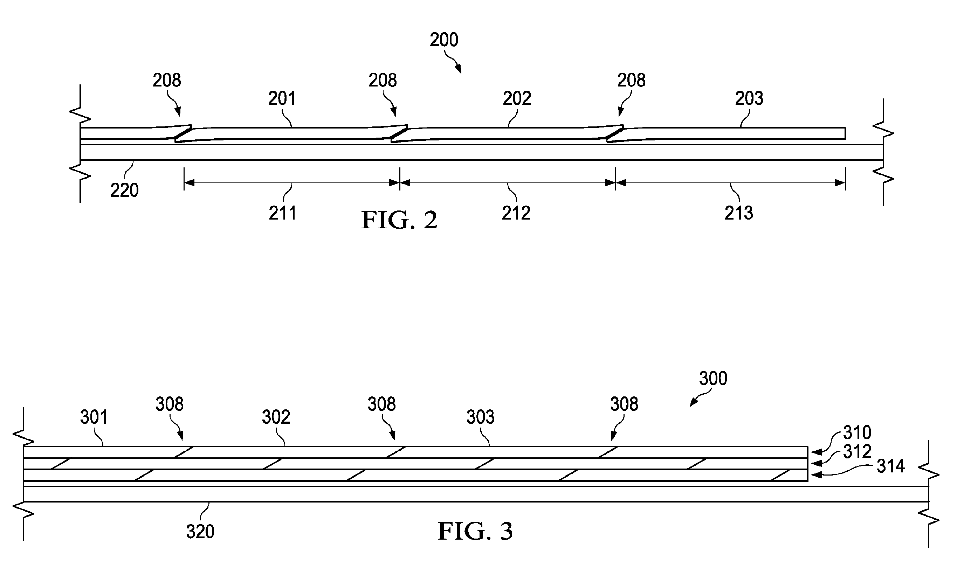

As shown in FIG. 2, a stacked ply assembly 200 comprises multiple plies 201, 202, and 203 which are laid on a flat surface 220, such as a table for example. The stacked ply assembly 200 of FIG. 2 contains only a single detail (or layer) of plies 201, 202 and 203 with overlapping edges forming joints 208. The overlap at the edges may typically comprise approximately 1.651cm (0.650 inches) to approximately 2.235cm (0.880 inches), wherein the overlap may be chosen based on the circumference. In some embodiments, the joints 208 may be butt spliced joints. Each ply may comprise a different length, wherein ply 201 may have a length 211, ply 202 may have length 212 and ply 203 may have a length 213. The lengths of the plies may be chosen to avoid overlap of the joints 208 when the stacked ply assembly 200 rolled onto a mandrel. In other words, it may be desired that the joints 208 have different angular locations around the circumference of the mandrel when the stacked ply assembly 200 is rolled. A geometric correlation or relationship between the circumference of the mandrel (or diameter of the mandrel) and the thickness of the plies may be used to determine the correct length of the plies. Additionally, it may be taken into consideration that the diameter of the ply assembly 200 as it is rolled onto the mandrel will increase as it rolls. Changes in ply length during curing may also be considered as well as comprise rate of the material during curing. In some embodiments, the material of the plies 201, 202, and 203 may comprise a tacky material and may be operable to hold the plies 201, 202 and 203 together at the joints 208 (even at room temperature). A vacuum or other compressive force may be applied to the formed-up stacked ply assembly 200 to provide adequate attachment at the joints 208 between plies.

In some embodiments, the plies 201, 202 and 203 may comprise a pre-preg laminate material having fibers within a resin matrix, such as a fiberglass or carbon fiber epoxy resin fabric (e.g. Cytec 5276-1). The plies 201, 202, 203 may comprise different fiber orientations, such as 0 degrees, 45 degrees, 90 degrees, and 135 degrees with respect to the width of the material, although embodiments may have plies within a detail (layer) oriented the same direction (e.g. the same fiber orientation). In some embodiments, the plies 201, 202, 203 may comprise multiple materials, including combinations of fiberglass and carbon fiber, for example. In some embodiments, each ply 201, 202 or 203 may comprise composite fabric and/or tape material.

FIG. 3 illustrates an alternative stacked ply assembly 300 having multiple details of plies. The stacked ply assembly 300 of FIG. 3 includes three details (or layers) 310, 312, and 314 of plies 301, 302, and 303, wherein the length of each of the plurality of plies of composite material and the order of laying out the plies is selected to ensure that, during rolling and curing, the joints 308 between plies will not overlap in order to maintain an approximately constant thickness (or wall thickness) all across the tube circumference, for example. In some embodiments, one or more of the layers 310, 312 and 314 may comprise fabric material (as described above) and/or tape material. By including additional details (layers) of plies, selecting the length of each ply to avoid overlap of joints 308 during rolling (e.g. staggering the joints) may become increasingly complex. Typically, such detail of plies (with overlapping butt joints) might be laid out on the table 320 one at a time, with the plies of the first detail 314 being laid on the table, then the plies of the second detail 312 being laid on top the first detail 314, and then the plies of the third detail 310 being laid on top of the second detail 312 (and so on if there are to be additional details for a specific embodiment).

In some embodiments, after the desired number of detail layers has been placed, the assembly 300 may be vacuumed to tack (or otherwise assemble) the detail layers 310, 312, and 314 together into a stacked ply assembly 300. The vacuum step may also be known as de-bulking. Alternative methods of assembling the details into a stacked ply assembly could also be used, such as hot debulking at approximately 180 degrees Fahrenheit for approximately 15 minutes. The tackiness of the material of the layers aids in assembly of the layers 310, 312, and 314.

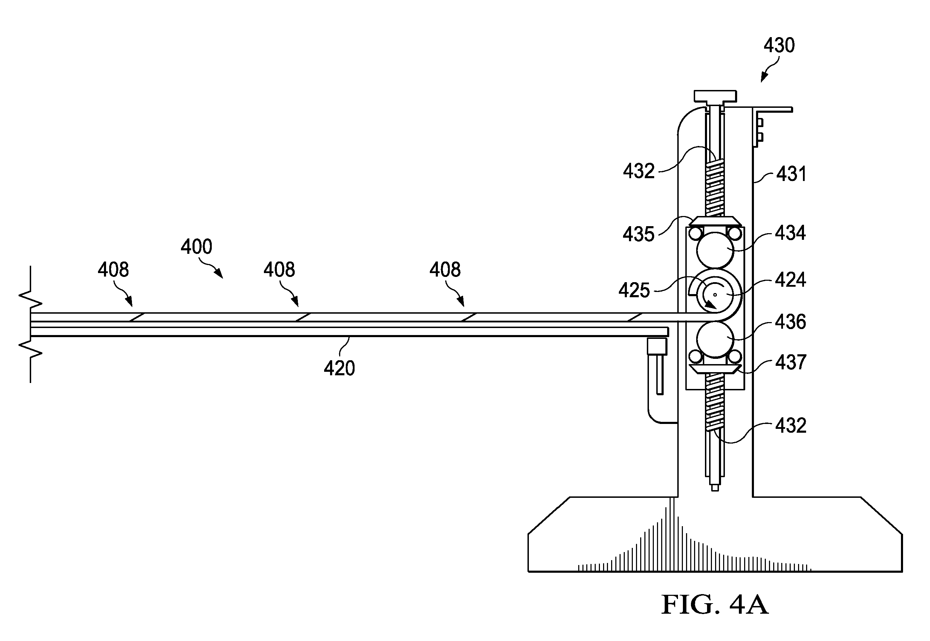

As shown in FIGS. 4A-4B, after stacking the plies (into one or more detail layers) on the flat surface 420, the stacked ply assembly 400 comprising joints 408 are rolled around a mandrel 424 using a rolling tool 430. The stacked ply assembly 400 may adhere to the surface of the mandrel 424 (via tackiness of material or additionally adhesive), and typically the front of the stacked ply assembly 400 may be fixed to the mandrel 424 for rolling. The mandrel 424 may comprise a cylindrical shape (or circular cross-section) and may be spun in a clockwise or counter-clockwise direction 425 (typically depending of its interaction with the rolling tool 430), wherein the stacked ply assembly 400 may be pressed to the mandrel 424 and rolled about the mandrel 424 during rolling. In alternative embodiments, the cross-section of the mandrel 424 may comprise another shape other than circular, such as oval, egg shaped, elliptical or another shape, and typically the pressure on the surface of the mandrel 424 may be maintained approximately constant throughout rotation despite the shape. The mandrel 424 may be fixed between two rollers: a top roller 434 and a bottom roller 436, wherein the rollers 434 and 436 may be operable to apply pressure to the assembly 400 as it rolls onto the mandrel 424. In some embodiments, the mandrel 424 may be rolled by a crank connected to the mandrel 424 and/or the rollers 434 and 436, but in other embodiments, the rolling may be automated. To increase the compaction ratio, it may be possible in some embodiments to heat the stacked material 400 with hot air or a light just before rolling the material.

The rollers 434 and 436 are pressed onto the mandrel 424 rollers 434 and 436 are pressed onto the mandrel 424 with springs 432, wherein the springs 432 may be affixed to the rollers 434 and 436 via brackets 435 and 437. The springs 432 may press between the housing 431 of the rolling tool 430 and the roller 434, 436 and/or bracket 435, 437. The rolling tool 430 may comprise any number of springs 432 and corresponding brackets 435 and 437 affixed to the rollers 434 and 436. As the stacked ply assembly 400 rolls onto the mandrel 424, the diameter around the mandrel 424 may increase, and the springs 432 may compress to apply uniform pressure across the mandrel 424 (while adjusting to the increase in diameter). In some embodiments, the mandrel 424 may comprise a non-stick surface coating, such as Teflon for example, so that after the assembly 400 has been rolled onto the mandrel 424, the mandrel 424 may be easily removed from the rolled assembly. Additionally, the rollers 434 and 436 and other equipment that contacts the surface of the assembly 400 may also comprise a non-stick surface coating (e.g. a releasing agent).

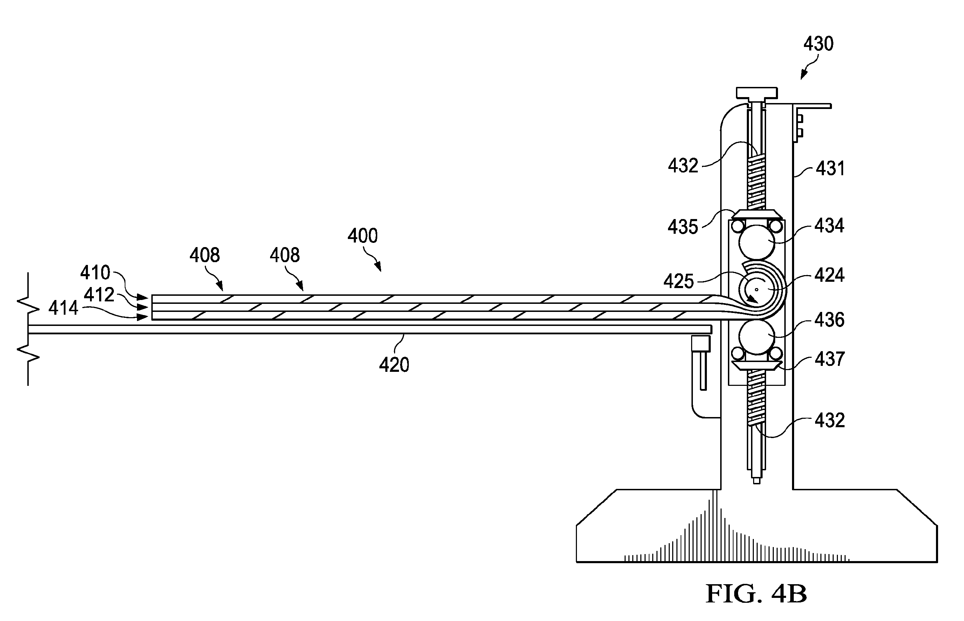

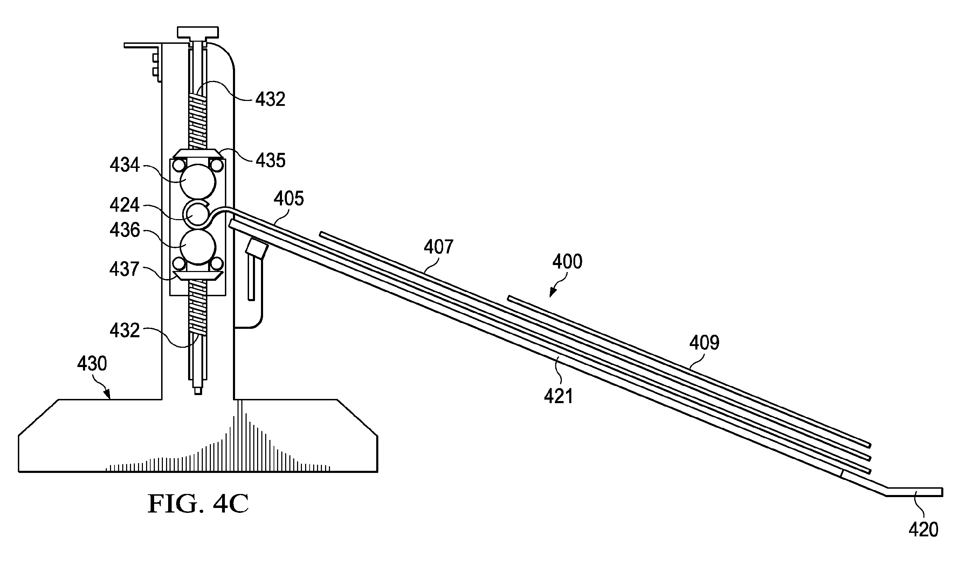

Before rolling, the start or front of the stacked ply assembly 400 may be tacked (possibly temporarily in some embodiments) to the surface of the mandrel 424. In FIG. 4A, the assembly 400 may comprise one detail layer with multiple joints 408, while in FIG. 4B, the assembly 400 may comprise multiple detail layers 410, 412, and 414, all comprising multiple joints 408, wherein the layers 410, 412, and 414 may be rolled around the mandrel 424 together. In some embodiments, the layers 410, 412, and 414 may start rolling onto the mandrel 424 at the same time, while in other embodiments, the layers 410, 412, and 414 may start rolling onto the mandrel 424 at different or staggered times. As shown in FIG. 4C, in some embodiments, the layers 405, 407, and 409 of the assembly 400 may be spaced to start rolling onto the mandrel 424 at different times. Additionally, the flat surface 420 or table may comprise an angled section 421 leading to the rolling tool 430 so that gravity can aid in maintaining tension on the stacked ply assembly 400.

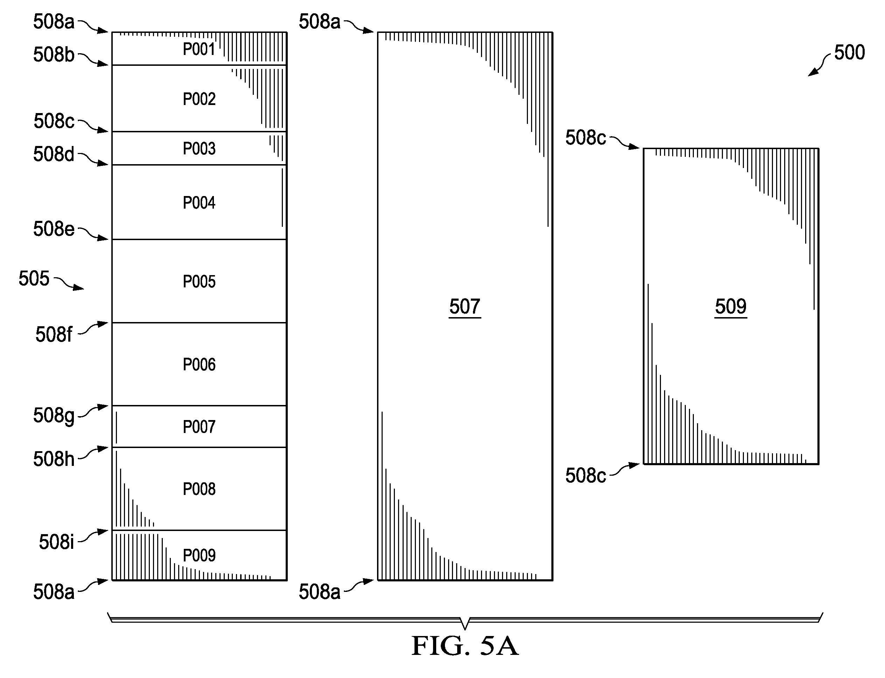

Referring now to FIGS. 5A-5B, an exemplary layout of the details (or layers) of an exemplary stacked ply assembly 500 is shown. A first detail of composite fabric 505 (which typically might be laid out on the table first) may comprise a plurality of plies P001, P002, P003, P004, P005, P006, P007, P008 and P009, wherein the plies may all comprise different lengths but approximately the same width. For example, in FIG. 5A ply P001 may have a length of approximately 13.823cm (5.442 inches), ply P002 may have a length of approximately 22.234cm (10.718 inches), ply P003 may have a length of approximately 14.857cm (5.849 inches), ply P004 may have a length of approximately 29.512cm (11.619 inches), ply P005 may have a length of approximately 30.272cm (12.312 inches), ply P006 may have a length of approximately 33.033cm (13.005 inches), ply P007 may have a length of approximately 18.090cm (7.122 inches), ply P008 may have a length of approximately 37.720cm (14.063 inches), ply P009 may have a length of approximately 19.389cm (7.633 inches). The lengths of the plies may be determined based on a correlation with the circumference of the mandrel that the plies are to be rolled on as well as the thickness of the stacked ply assembly 500. In the embodiment, shown in FIG. 5A, the width of the plies of detail 505 may be approximately 28 inches, and the total length of the detail 505 may be approximately 222.918cm (87.763 inches). The plies may overlap at their adjacent edges or joints 508b, 508c, 508d, 508e, 508f, 508g, 508h, and 508i, and may form butt spliced joints. The overlap at the edges may typically comprise approximately 1.651cm (0.650 inches) to approximately 2.235cm (0.880 inches), wherein the overlap may be chosen based on the circumference. In some embodiments, the stacked ply assembly 500 may comprise one or more additional detail layers, such as 507 and 509, wherein these layers may comprise fabric and/or tape. In some embodiments, the layer 507 may comprise a width similar to that of detail 505 (e.g. approximately 71.12cm (28 inches)) and a length of approximately 209.095cm (82.321 inches). In some embodiments, the layer 509 may comprise a width similar to that of detail 505 (e.g. approximately 71.12cm (28 inches) and a length of approximately 152.245cm (56.939 inches).

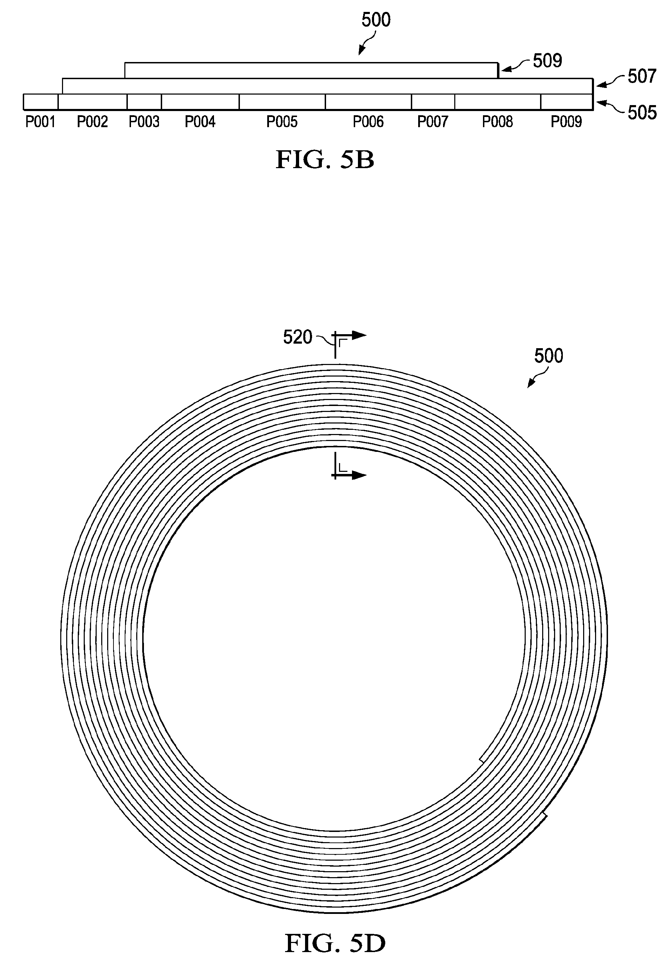

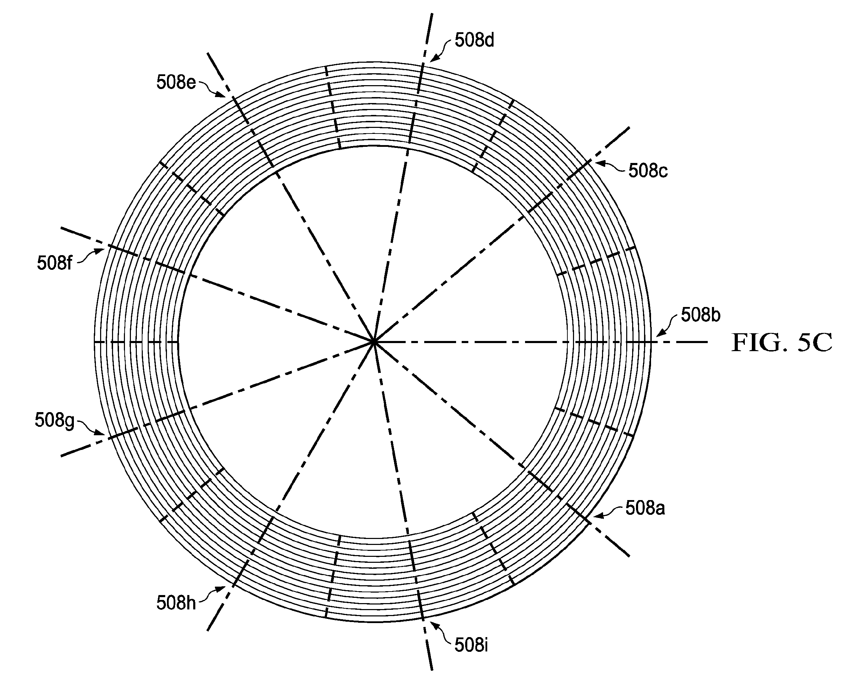

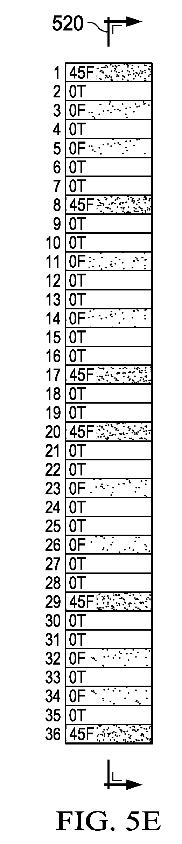

In FIGS. 5A-5B, the first detail 505 comprises multiple plies of composite material, while the second detail 507 and third detail 509 might comprise composite continuous tape (e.g. only one ply). Additionally, in some other embodiments, multiple layers such as layer 505 comprising multiple plies may be stacked within the stacked ply assembly (for example, the second and third details (and any other detail layers) could also comprise a plurality of plies spliced together with joints) as needed to meet the structural requirements of the part. As shown in FIG. 5, the different layers 505, 507, and 509 may comprise similar or different lengths, but may all comprise approximately equal widths. The different lengths may allow for the layers 505, 507, and 509 to begin or end rolling on the mandrel at different times and/or may assist in preventing overlap of ply joints (in some embodiments including also starting and ending edges). Typically, each detail might have a different fiber orientation to add strength in more than on direction. In FIG. 5, for example, the first detail 505 plies might be oriented 0 degree, the second detail 507 of tape might be oriented 90 degrees, and the third detail 509 of tape might be oriented 45 degrees. Alternatively, the second detail 507 and third detail 509 may comprise 0 degree orientations. In some embodiments, the plies P001, P002, P003, P004, P005, P006, P007, P008 and P009 of the first detail 505 may comprise fabric with the same orientations of fibers (although in other embodiments, the fiber orientation of the plies in each detail could vary). Typically, in the embodiment shown in FIG. 5A, the plies of detail 505 would vary in fiber orientation as follows: P001 might have an orientation of 45 degrees, P002 might have an orientation of 0 degrees, P003 might have an orientation of 45 degrees, P004 might have an orientation of 0 degrees, P005 might have an orientation of 45 degrees, P006 might have an orientation of 0 degrees, P007 might have an orientation of 45 degrees, P008 might have an orientation of 0 degrees, and P009 might have an orientation of 45 degrees. In some alternative embodiments, each of the multiple layers could be formed of a single ply of continuous tape (typically with each layer oriented in different directions). Since such an embodiment would not have joints between plies, such a process might be simpler (since there would not be a concern regarding spacing joints about the circumference during rolling). However, even in such an embodiment, the beginning and/or ending edges of the plies for different detail layers might be spaced around the circumference. FIG. 5B illustrates a side elevation view of the details 505, 507, and 509 forming the stacked ply assembly 500 of FIG. 5A. In some embodiments, detail 505 and detail 507 may be aligned at their edges to be rolled, while detail 509 may be aligned to begin rolling after details 505 and 507. Additionally, the details 505, 507, and 509 may complete rolling at similar or different locations around the circumference of the mandrel.

Referring now to FIG. 5C, a cross section of a rolled stacked ply assembly 500 after it has been rolled onto the mandrel is shown. The rolled stacked ply assembly 500 may comprise the detail layers 505, 507, and 509 shown in FIG. 5A. FIG. 5C illustrates the starting point and ending point of each of the plies P001, P002, P003, P004, P005, P006, P007, P008 and P009 of layer 505, wherein the ending point of one ply may be joined to the starting point of a consecutive ply. For example, ply P001 may start at joint 508a, and the end of ply P001 and start of ply P002 may occur at the same point at joint 508b (which is between ply P001 and ply P002). In some embodiments, the length of overlap may increase proportionally with the tube diameter. Additionally, the end of ply P002 and start of ply P003 may occur at joint 508c, the end of ply P003 and start of ply P004 may occur at joint 508d, the end of ply P004 and start of ply P005 may occur at joint 508e, the end of ply P005 and start of ply P006 may occur at joint 508f, the end of ply P006 and start of ply P007 may occur at joint 508g, the end of ply P007 and start of ply P008 may occur at joint 508h, the end of ply P008 and start of ply P009 may occur at joint 508i, and ply P009 may end at joint 508a. It can be seen from FIG. 5C, that the joints between each of the plies P001, P002, P003, P004, P005, P006, P007, P008 and P009 are spread around the circumference of the final rolled ply assembly 500, and do not overlap. The starting point and ending point of the layers 507 and 509 are shown as well, wherein layer 507 starts at joint 508a and ends at joint 508a and layer 509 starts at joint 508c and ends at joint 508c. The starting and ending points of the layers 507 and 509 may not overlap themselves, avoiding any over thickness in the laminate. In other embodiments, they may be distributed around the circumference to ensure they do not overlap with the joints of the first detail 505 as well, in some embodiments. Typically, the starting and ending edges of different plies of fabric and/or tape may be determined based on their desired radial position in the tube thickness. Additionally, the mandrel may complete any number of revolutions or partial revolutions between each of the joints 508a-i (such that one or more of the plies may span the circumference multiple times). In some embodiments, the number of revolutions may vary between each of the layers 505, 507, and 509 and/or plies of layer 505. For example, ply P001 may start at joint 508a and wrap around the mandrel once and then a fraction more (such as 1/9 of the circumference) and end at joint 508b. Alternatively, ply P001 may start at joint 508a and wrap around the mandrel more than once, or wrap around the mandrel less than once, and end at joint 508b. The same may be true for each of the plies and layers. Referring now to FIGS. 5D and 5E, a cross-section 520 of a width of the rolled stacked ply assembly 500 is shown. In the embodiment shown in FIG. 5E, the cross-section 520 may comprise multiple layers of fabric (45F and 0F) and tape (0T). The fabric may comprise multiple orientations, such as 45 degrees (45F) and 0 degrees (OF). The order of the layers may be determined by the length of the plies and/or layer. The ability to control the orientation, length, and layering of plies of composite material provides the ability to tailor the tube structural strength as required by the specific applications.

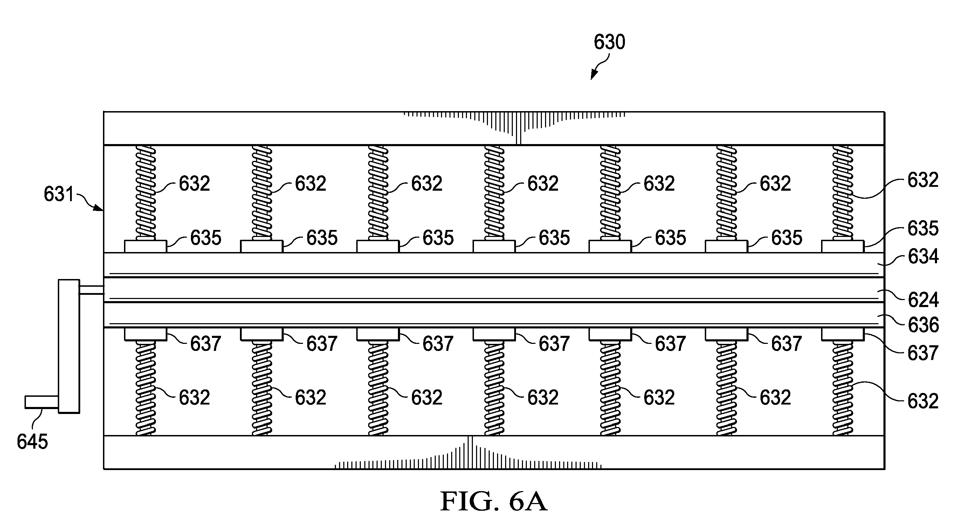

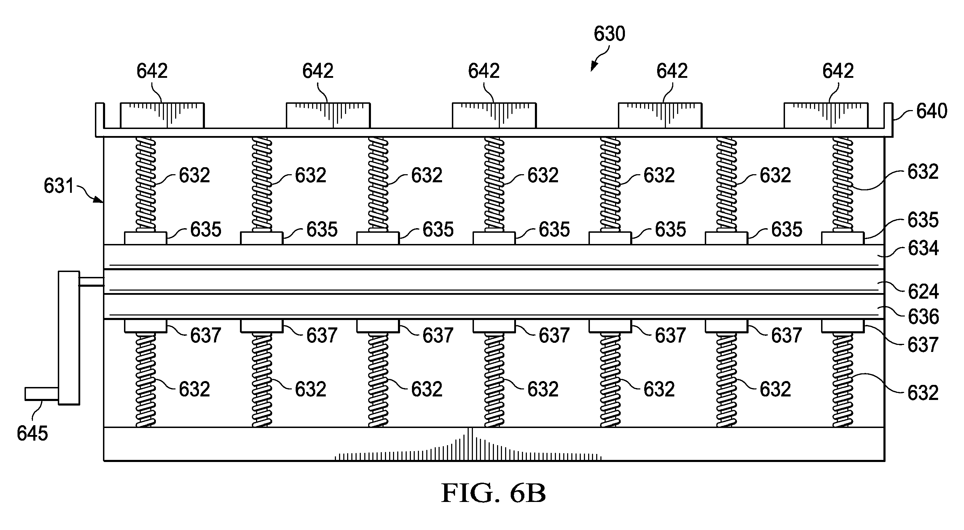

Referring now to FIGS. 6A and 6B, detailed views of the rolling tool 630 are shown. In FIG. 6A, the mandrel 624 is fitted between the top roller 634 and bottom roller 636. The rollers 634 and 636 are held against the mandrel 624 by springs 632, wherein the springs 632 may be affixed to the rollers 634 and 636 via brackets 635 and 636. The springs 632 may press between the housing 631 of the rolling tool 630 and the brackets 635 and 636. The rolling tool 630 may comprise any number of springs 632 and brackets 635 and 636 affixed to the rollers 634 and 636. Typically, the number of springs may be between about 5 and about 10 to spread the load approximately equally on the rollers. In other embodiments, hydraulic or any other system may be used to produce pressure on the rollers. The mandrel 624 may be connected to a crank 645 operable to spin or roll the mandrel 624 in a clockwise or counter-clockwise direction. In other embodiments, the crank 645 may be connected to one or more of the rollers 634 and 636. In yet other embodiments, an electronic rolling control system may be connected to the mandrel 624 and/or the rollers 634 and 636.

In an embodiment shown in FIG. 6B, a carriage 640 may be attached to the housing 631 of the rolling tool 630, wherein the carriage 640 may be operable to hold weights 642. Typically, the carriage 640 is mounted atop the housing to provide additional downward force on the top springs 632. The additional pressure provided by the weights 642 may result in more uniform pressure on the surface of the mandrel 624 from the rollers 634 and 636 during rolling. In some embodiments, the pressure provided by the springs 632, the weights 642 and carriage 640, or a combination thereof may be about 552-827 kPa (80-120 psi) or about 552 kPa (80 psi). In some embodiments, the weight or pressure provided by the springs 632 and/or the weighted carriage 640 may need to be adjusted during the rolling of the stacked ply assembly.

After being rolled, the rolled stacked ply assembly is characterized as composite tubing, which undergoes a curing process. A curing process may harden and consolidate the composite material of the rolled stacked ply assembly by applying pressure and/or heat to the inner surface of the composite material. Curing the composite tubing may comprise inserting the composite tubing into a mold, inserting a bladder within the space in the tubing applying pressure (for example 552 kPa (80 psi)) inside the bladder (e.g. to press the composite tubing against the mold), and heating the composite tubing (for example, for 2 hours at 182°C (360 degrees Fahrenheit), perhaps via standard autoclave cycle). In some embodiments, the plies of the rolled stacked ply assembly may shift during the curing process as the assembly is compressed (and typically this may be accounted for when selecting ply length). The curing process may be completed using an autoclave, in some embodiments. After the curing process, to quantify the quality of the consolidation of the ply assembly, the finished part may undergo non-destructive inspection (NDI) to determine the quality (e.g. porosity) of the material. Typically, a cured composite tube should be substantially free from porosity. Additionally, the cylindricity of the finished part may be tested via NDI, wherein design criteria may call for a cylindricity tolerance of less than about 0.254mm (0.01)". The outer dimensions of the final composite tubing may be controlled by the size of the curing tool or mold. The coefficient of thermal expansion (CTE) of the material of the curing tool or mold may be considered when determining the size of the tool or mold.

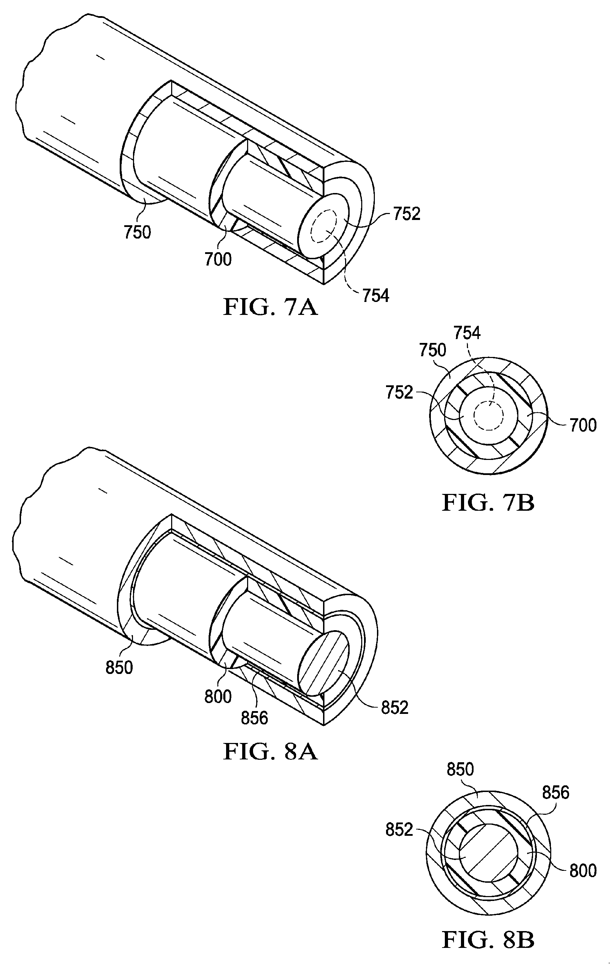

Referring now to FIGS. 7A-7B, two views of a rolled stacked ply assembly 700 within a mold (or curing tool) 750 are shown, wherein the mold 750 may comprise a tubular pressure vessel. The rolled ply assembly 700 may be removed or separated from the mandrel and placed in the mold 750, and a bladder 752 may be inserted into the rolled stacked ply assembly 700. In some embodiments, a guide pole 754 may be used to insert the bladder 752. During the curing process, the bladder 754 may expand and press the rolled stacked ply assembly 700 against the inner wall of the mold 750. The pressure from the bladder 752 and/or mold 750 may compress the rolled stacked ply assembly 700 to reduce the porosity of the material. Additionally, the pressure may create smooth inner and outer surfaces on the rolled stacked ply assembly 700. In some embodiments, the bladder may comprise a silicone material.

Referring now to FIGS. 8A-8B, an alternative embodiment of a ply assembly 800 within a mold 850 is shown. In some embodiments, the mold 850 may comprise an inner layer of expanding material 856, wherein the inner layer 856 may comprise silicone, for example, in some embodiments. Additionally, in some embodiments, the ply assembly 800 may remain on the mandrel 852 when inserted into the mold 850. The mandrel 852 may in some embodiments, comprise a metal (e.g. aluminum) or another similar material operable to expand when heated and/or pressurized. Alternatively, the mandrel 852 might be removed and replaced with a cylinder of expanding material such as aluminum. Therefore, during the curing process, the ply assembly 800 may be compressed between the inner layer 856 of the mold 850 and the mandrel 852. In still other embodiments, a layer of silicone may be placed on the mandrel 852 before rolling the stacked ply assembly 800, such that the silicone layer is between the mandrel 852 and the ply assembly 800, and during the curing process, the silicone layer may expand and compress the ply assembly 800. In yet other embodiments, the mandrel 852 may be removed and replaced by a tube of another material, such as a silicone tube.

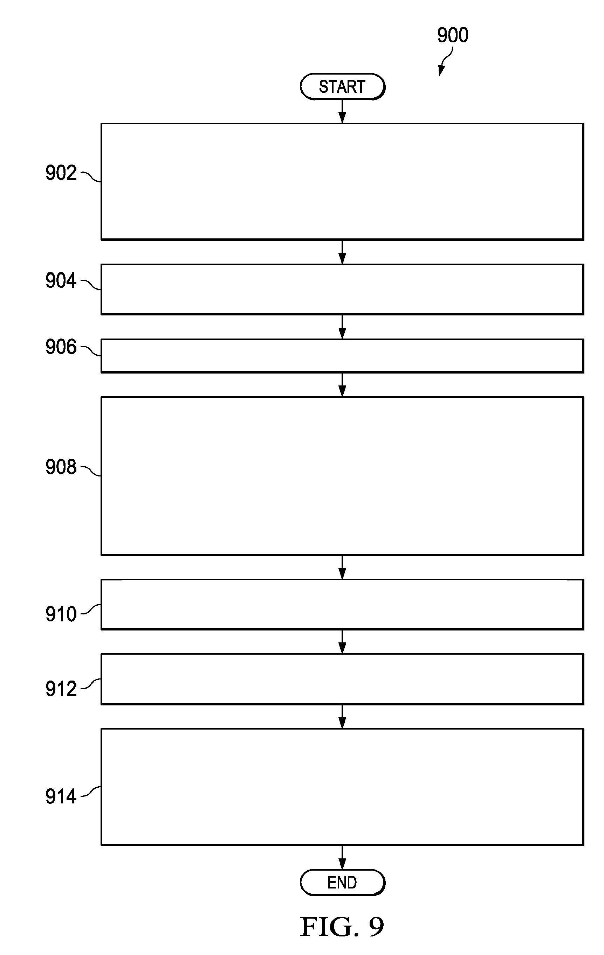

Referring now to FIG. 9, an exemplary method of forming a multi-layered composite element is shown. The method 900 optionally comprises, at block 902, selecting the length of each of the plurality of plies of composite material and selecting the order of laying out the plies to ensure that, during rolling and curing, the joints (including starting and ending edges) between plies will not overlap. For example, a geometric correlation between the circumference of the mandrel and the thickness of the plies may be used to determine the desire lengths of the plies (or the distance between the joints). The length of the plies may also be selected to account for changes during curing. Then, at block 904, the method comprises pre-stacking a plurality of plies of composite material on a flat surface to form a stacked ply assembly. At block 906, the method comprises applying vacuum to the stacked ply assembly. At block 908, the method comprises rolling the stacked ply assembly around a mandrel while applying pressure (or compressive force), wherein pressure (for example, approximately 80 to 120 psi) may be applied to the stacked ply assembly during rolling around the mandrel using one of the following: springs pressing rollers onto the mandrel, a weighted carriage applied to one or more for the rollers, hydraulic pressure, and combinations thereof. At block 910, the method may optionally comprise trimming or machining the rolled stacked ply assembly to bring the part into specific tolerances. Then, at block 912, the method comprises (optionally) removing the mandrel from the rolled stacked ply assembly. Then, at block 914, the method comprises curing the rolled stacked ply assembly by inserting the rolled stacked ply assembly into a mold, applying pressure inside the rolled stacked ply assembly (to press the rolled stacked ply assembly against the mold), and heating the rolled stacked ply assembly.

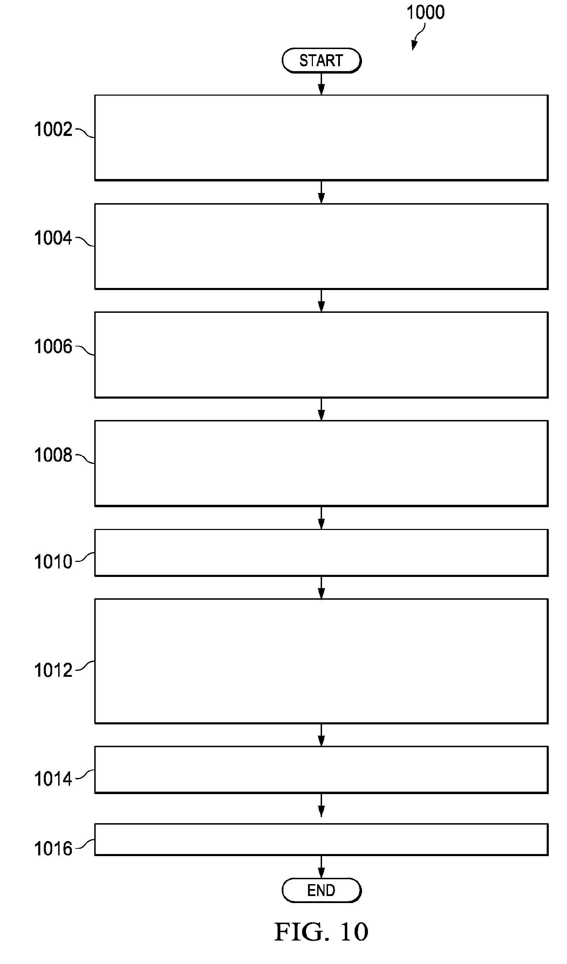

FIG. 10 illustrates an alternative exemplary method of forming multi-layered composite tubing. The method 1000 optionally comprises, at block 1002, selecting the length of each of the plurality of plies of composite material and selecting the order of laying out the plies to ensure that, during rolling and curing, the joints between plies will not overlap. In some embodiments, the composite tubing has a circumference and the joints between adjacent plies are distributed around the circumference of the composite tubing to prevent overlap. Then, at block 1004, the method comprises laying a plurality of plies of composite material on a flat surface to form a first detail, with portions of adjacent plies of the first detail overlapping to form butt splicing joints. At block 1006, the method comprises laying one or more additional plies of composite material to form a second detail atop the first detail, with portions of any adjacent plies in the second detail overlapping to form butt splicing joints. At block 1008, the method comprises laying one or more additional plies of composite material to form a third detail atop the second detail, with portions of any adjacent plies in the third detail overlapping to form butt splicing joints. At block 1010, the method comprises applying a vacuum to the plurality of plies to form a stacked ply assembly. At block 1012, the method comprises rolling the stacked ply assembly around a mandrel while applying pressure (or compressive force) to form composite tubing, wherein the composite tubing has a circumference and the joints between adjacent plies are distributed around the circumference of the composite tubing to prevent overlap. Then, at block 1014, the method may optionally comprise trimming or machining the rolled stacked ply assembly to bring the part into specific tolerances. At block 1016, the method comprises curing the composite tubing. In some embodiments, curing comprises inserting the composite tubing into a mold, applying pressure inside the composite tubing (to press the composite tubing against the mold), and heating the composite tubing (for example, via standard autoclave cycle).

As has been described above and shown in the figures, certain embodiments of the disclosure include a shim that is used to bond a component to a bearing. The shim may have an elastic modulus value that is lower than an elastic modulus value of the component being bonded to the bearing. In such a case, as torsional strain is applied to the component, the shim absorbs a portion of the torsional strain. This reduces an amount of torsional strain experienced by an adhesive layer. Accordingly, since the amount of torsional strain in the adhesive layer is reduced, the adhesive layer may be less likely to fail during operation and may require less maintenance. Additionally, the use of a shim may be advantageous in that it can replace custom molded bearings and components, which may have long lead times and be difficult to assemble and replace.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, R₁, and an upper limit, Rᵤ, is disclosed, any number falling within the range is specifically disclosed. In particular, the following numbers within the range are specifically disclosed: R=R₁+k*(Rᵤ-R₁), wherein k is a variable ranging from 1 percent to 100 percent with a 1 percent increment, i.e., k is 1 percent, 2 percent, 3 percent, 4 percent, 5 percent, ..., 50 percent, 51 percent, 52 percent, ..., 95 percent, 96 percent, 97 percent, 98 percent, 99 percent, or 100 percent. Unless otherwise stated, the term "about" shall mean plus or minus 10 percent of the subsequent value. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow. Each and every claim is incorporated as further disclosure into the specification and the claims are embodiment(s) of the present invention.

## Claims

1. A method of forming a multi-layered composite element, comprising:
pre-stacking a plurality of plies (201-203, 301-303, P001-P009) of composite material on a flat surface (220, 420) to form a stacked ply assembly (200, 300, 400, 500, 700, 800);
rolling the stacked ply assembly (201-203, 301-303, P001-P009) around a mandrel (424, 624, 852) having a longitudinal axis while applying pressure; and
curing the rolled stacked ply assembly (201-203, 301-303, P001-P009);
wherein joints (208, 308, 408, 508a-i) between the plies extend substantially parallel to the axis and are distributed around the rolled stacked ply assembly (201-203, 301-303, P001-P009) to prevent the joint (208, 308, 408, 508a-i) between any two plies being at the same radial angular location as the joint (208, 308, 408, 508a-i) between any other two plies (201-203, 301-303, P001-P009); and
wherein rolling the stacked ply assembly (201-203, 301-303, P001-P009) around a mandrel (424, 624, 852) while applying pressure comprises applying a uniform pressure across the mandrel (424, 624, 852) using a top roller (434, 634) at a first side of the mandrel (424, 624, 852) and a bottom roller (436, 636) at a second, opposite, side of the mandrel (424, 624, 852), wherein the top and bottom rollers (434, 634, 436, 636) are pressed onto the mandrel (424, 624, 852) with springs (432), and wherein the top and bottom rollers (434, 634, 436, 636) are operable to apply the uniform pressure to the rolled stacked ply assembly (201-203, 301-303, P001-P009) as it rolls around the mandrel (424, 624, 852).

2. The method of claim 1, wherein pre-stacking the plurality of plies (201-203, 301-303, P001-P009) comprises:
laying a plurality of plies (201-203, 301-303, P001-P009) of composite material on the flat surface (220, 420) to form a first detail (314, 505), with portions of adjacent plies of the first detail (314, 505) overlapping to form joints (208, 308, 408, 508a-i);
laying one or more additional plies of composite material to form a second detail (312, 507) atop the first detail (314, 505);
applying a vacuum to the plurality of plies (201-203, 301-303, P001-P009) to form the stacked ply assembly (201-203, 301-303, P001-P009); and
the rolling of the stacked ply assembly (201-203, 301-303, P001-P009) around a mandrel (424, 624, 852) while applying pressure forms the composite element as a composite tubing with a circumference.

3. The method of claim 1 or 2 further comprising:
selecting the length of each of the plurality of plies (201-203, 301-303, P001-P009) of composite material;
and selecting the order of laying out the plies (201-203, 301-303, P001-P009) to ensure that, during rolling and curing, the joints (208, 308, 408, 508a-i) between plies (201-203, 301-303, P001-P009) will not be at the same angular location after the stacked ply assembly (201-203, 301-303, P001-P009) is rolled.

4. The method of claim 1, wherein the joints (208, 308, 408, 508a-i) between plies are butt spliced joints (208, 308, 408, 508a-i).

5. The method of claim 1 further comprising applying vacuum to the stacked ply assembly (201-203, 301-303, P001-P009).

6. The method of any preceding claim, wherein curing the rolled stacked ply assembly (201-203, 301-303, P001-P009) comprises:
inserting the rolled stacked ply assembly (201-203, 301-303, P001-P009) into a mold;
applying pressure inside the rolled stacked ply assembly (201-203, 301-303, P001-P009); and
heating the rolled stacked ply assembly (201-203, 301-303, P001-P009).

7. The method of claim 6, wherein pressure is applied inside the rolled stacked ply assembly (201-203, 301-303, P001-P009) using one of the following: inflating a bladder within the rolled stacked ply assembly (201-203, 301-303, P001-P009), heating a silicone tube within the rolled stacked ply assembly (201-203, 301-303, P001-P009), and heating an metal mandrel within the rolled stacked ply assembly (201-203, 301-303, P001-P009).

8. The method of any preceding claim, further comprising removing the mandrel (424, 624, 852) from the rolled stacked ply assembly (201-203, 301-303, P001-P009).

9. The method of claim 6 or claim 7, wherein pressure is applied to the stacked ply assembly (201-203, 301-303, P001-P009) during rolling around the mandrel (424, 624, 852) using a weighted carriage (640) applied to one or more of the rollers (434, 634, 436, 636).

10. The method of any preceding claim, wherein the stacked ply assembly (201-203, 301-303, P001-P009) is formed of plies (201-203, 301-303, P001-P009) of prepreg laminate material having a plurality of orientations.

11. The method of any preceding claim, wherein curing the rolled stacked ply assembly (201-203, 301-303, P001-P009) comprises:
inserting the rolled stacked ply assembly (201-203, 301-303, P001-P009) into a mold (750, 850);
applying pressure inside the rolled stacked ply assembly (201-203, 301-303, P001-P009) to press the rolled stacked ply assembly (201-203, 301-303, P001-P009) against the mold (750, 850); and
heating the rolled stacked ply assembly (201-203, 301-303, P001-P009), wherein the mold (750, 850) is a tubular pressure vessel.

12. The method of claim 3, when dependent on claim 2, wherein ply length and order are selected based on the circumference of the composite tubing being formed and the change in the circumference during rolling and curing; and wherein thickness of the composite tubing is approximately uniform.

13. The method of any preceding claim, depending directly or indirectly from claim 2, wherein the plies (201-203, 301-303, P001-P009) of composite material are formed of pre-preg laminate material having fibers within a resin matrix, the plies (201-203, 301-303, P001-P009) of composite material each have an orientation based on the fibers within the resin, the plies (201-203, 301-303, P001-P009) of the first detail (314, 505) are oriented in one direction, and the plies of the second detail (312, 507) are oriented in another direction, different than the direction of the first detail (314, 505); and optionally or preferably wherein the direction of the first detail (314, 505) and the direction of the second detail (312, 507) are oriented approximately 45-90 degrees apart.

14. The method of claim 13 further comprising laying one or more additional plies (201-203, 301-303, P001-P009) of composite material to form a third detail atop the second detail (312, 507); wherein the plies (201-203, 301-303, P001-P009) of the first detail (314, 505) comprise composite fabric; wherein the plies of the second detail (312, 507) and third detail are each formed of a single ply (201-203, 301-303, P001-P009) of continuous composite tape; and wherein the ply (201-203, 301-303, P001-P009) of the third detail has fibers oriented in a direction different than the first detail (314, 505) and second detail (312, 507).

15. The method of claim 6, when dependent directly or indirectly on claim 2, wherein sufficient pressure is applied to the stacked ply assembly (201-203, 301-303, P001-P009) during rolling to substantially eliminate porosity; and wherein sufficient pressure is applied inside the composite tubing during curing to consolidate the plies.

## Patentansprüche

1. Verfahren zum Formen eines mehrschichtigen Verbundbauteils, umfassend:
Vorstapeln von mehreren Schichten (201-203, 301-303, P001-P009) von Verbundwerkstoff auf einer flachen Oberfläche (220, 420), um einen gestapelten Schichtaufbau (200, 300, 400, 500, 700, 800) zu formen;
Wickeln des gestapelten Schichtaufbaus (201-203, 301-303, P001-P009) um einen Dorn (424, 624, 852) mit einer Längsachse unter Anlegen von Druck; und
Aushärten des gewickelten gestapelten Schichtaufbaus (201-203, 301-303, P001-P009);
wobei sich Verbindungsstellen (208, 308, 408, 508a-i) zwischen den Schichten im Wesentlichen parallel zur Achse erstrecken und um den gewickelten gestapelten Schichtaufbau (201-203, 301-303, P001-P009) verteilt sind, um zu verhindern, dass sich die Verbindungsstelle (208, 308, 408, 508a-i) zwischen irgendwelchen zwei Schichten an derselben radialen Winkelstelle befindet wie die Verbindungsstelle (208, 308, 408, 508a-i) zwischen irgendwelchen anderen zwei Schichten (201-203, 301-303, P001-P009); und
wobei das Wickeln des gestapelten Schichtaufbaus (201-203, 301-303, P001-P009) um einen Dorn (424, 624, 852) unter Anlegen von Druck das Anlegen eines gleichmäßigen Drucks über den Dorn (424, 624, 852) unter Verwendung einer oberen Walze (434, 634) an einer ersten Seite des Dorns (424, 624, 852) und einer unteren Walze (436, 636) an einer zweiten, gegenüberliegenden Seite des Dorns (424, 624, 852) umfasst, wobei die obere und die untere Walze (434, 634, 436, 636) mit Federn (432) auf den Dorn (424, 624, 852) gedrückt werden und wobei die obere und die untere Walze (434, 634, 436, 636) bedienbar sind, um den gleichmäßigen Druck auf den gewickelten gestapelten Schichtaufbau (201-203, 301-303, P001-P009) anzulegen, während er sich um den Dorn (424, 624, 852) wickelt.

2. Verfahren nach Anspruch 1, wobei das Vorstapeln der mehreren Schichten (201-203, 301-303, P001-P009) umfasst:
Legen von mehreren Schichten (201-203, 301-303, P001-P009) von Verbundwerkstoff auf die flache Oberfläche (220, 420), um einen ersten Ausschnitt (314, 505) zu formen, wobei sich Abschnitte von angrenzenden Schichten des ersten Ausschnitts (314, 505) überlappen, um Verbindungsstellen (208, 308, 408, 508a-i) zu formen;
Legen von einer oder mehreren zusätzlichen Schichten von Verbundwerkstoff, um einen zweiten Ausschnitt (312, 507) auf dem ersten Ausschnitt (314, 505) zu formen;
Anlegen eines Vakuums auf die mehreren Schichten (201-203, 301-303, P001-P009), um den gestapelten Schichtaufbau (201-203, 301-303, P001-P009) zu formen; und
das Wickeln des gestapelten Schichtaufbaus (201-203, 301-303, P001-P009) um einen Dorn (424, 624, 852), während das Anlegen von Druck das Verbundbauteil als eine Verbundrohrleitung mit einem Umfang formt.

3. Verfahren nach Anspruch 1 oder 2, ferner umfassend:
Auswählen der Länge einer jeden der mehreren Schichten (201-203, 301-303, P001-P009) von Verbundwerkstoff;
und Auswählen der Reihenfolge des Auslegens der Schichten (201-203, 301-303, P001-P009), um sicherzustellen, dass sich während des Wickelns und Aushärtens die Verbindungsstellen (208, 308, 408, 508a-i) zwischen Schichten (201-203, 301-303, P001-P009) nicht an derselben Winkelstellung befinden, nachdem der gestapelte Schichtaufbau (201-203, 301-303, P001-P009) gewickelt wurde.

4. Verfahren nach Anspruch 1, wobei die Verbindungsstellen (208, 308, 408, 508a-i) zwischen Schichten Stumpfspleiß-Verbindungsstellen (208, 308, 408, 508a-i) sind.

5. Verfahren nach Anspruch 1, ferner umfassend das Anlegen eines Vakuums an den gestapelten Schichtaufbau (201-203, 301-303, P001-P009).

6. Verfahren nach einem der vorhergehenden Ansprüche, wobei das Aushärten des gewickelten gestapelten Schichtaufbaus (201-203, 301-303, P001-P009) umfasst:
Einsetzen des gewickelten gestapelten Schichtaufbaus (201-203, 301-303, P001-P009) in ein Formwerkzeug;
Anlegen eines Drucks innerhalb des gewickelten gestapelten Schichtaufbaus (201-203, 301-303, P001-P009); und
Erwärmen des gewickelten gestapelten Schichtaufbaus (201-203, 301-303, P001-P009).

7. Verfahren nach Anspruch 6, wobei innerhalb des gewickelten gestapelten Schichtaufbaus (201-203, 301-303, P001-P009) unter Anwendung von einem der folgenden Optionen Druck angelegt wird: Aufblasen einer Blase innerhalb des gewickelten gestapelten Schichtaufbaus (201-203, 301-303, P001-P009), Erwärmen eines Silikonrohrs innerhalb des gewickelten gestapelten Schichtaufbaus (201-203, 301-303, P001-P009) und Erwärmen eines Metalldorns innerhalb des gewickelten gestapelten Schichtaufbaus (201-203, 301-303, P001-P009).

8. Verfahren nach einem der vorhergehenden Ansprüche, ferner umfassend das Entfernen des Dorns (424, 624, 852) aus dem gewickelten gestapelten Schichtaufbau (201-203, 301-303, P001-P009).

9. Verfahren nach Anspruch 6 oder Anspruch 7, wobei während des Wickelns um den Dorn (424, 624, 852) unter Verwendung eines mit Gewicht belasteten Wagens (640), der auf eine oder mehrere der Walzen (434, 634, 436, 636) aufgebracht wird, Druck an den gestapelten Schichtaufbau (201-203, 301-303, P001-P009) angelegt wird.

10. Verfahren nach einem der vorhergehenden Ansprüche, wobei der gestapelte Schichtaufbau (201-203, 301-303, P001-P009) aus Schichten (201-203, 301-303, P001-P009) aus Prepreg-Schichtmaterial mit einer Vielzahl von Ausrichtungen geformt ist.

11. Verfahren nach einem der vorhergehenden Ansprüche, wobei das Aushärten des gewickelten gestapelten Schichtaufbaus (201-203, 301-303, P001-P009) umfasst:
Einführen des gewickelten gestapelten Schichtaufbaus (201-203, 301-303, P001-P009) in ein Formwerkzeug (750, 850);
Anlegen eines Drucks innerhalb des gewickelten gestapelten Schichtaufbaus (201-203, 301-303, P001-P009), um den gewickelten gestapelten Schichtaufbau (201-203, 301-303, P001-P009) gegen das Formwerkzeug (750, 850) zu drücken; und
Erwärmen des gewickelten gestapelten Schichtaufbaus (201-203, 301-303, P001-P009), wobei das Formwerkzeug (750, 850) ein rohrförmiges Druckgefäß ist.

12. Verfahren nach Anspruch 3, wenn dieser von Anspruch 2 abhängt, wobei die Schichtlänge und - reihenfolge basierend auf dem Umfang der geformten Verbundrohrleitung und der Änderung des Umfangs während des Wickelns und Aushärtens ausgewählt werden; und wobei die Dicke der Verbundrohrleitung in etwa gleichmäßig ist.

13. Verfahren nach einem der vorhergehenden Ansprüche, direkt oder indirekt abhängig von Anspruch 2, wobei die Schichten (201-203, 301-303, P001-P009) von Verbundwerkstoff aus Prepreg-Schichtmaterial mit Fasern innerhalb einer Harzmatrix geformt sind, wobei die Schichten (201-203, 301-303, P001-P009) von Verbundwerkstoff jeweils eine Ausrichtung basierend auf den Fasern innerhalb des Harzes aufweisen, wobei die Schichten (201-203, 301-303, P001-P009) des ersten Ausschnitts (314, 505) in einer Richtung ausgerichtet sind und die Schichten des zweiten Ausschnitts (312, 507) in einer anderen Richtung ausgerichtet sind, die sich von der Richtung des ersten Ausschnitts (314, 505) unterscheidet; und wobei gegebenenfalls oder vorzugsweise die Richtung des ersten Ausschnitts (314, 505) und die Richtung des zweiten Ausschnitts (312, 507) in etwa 45 bis 90° voneinander getrennt ausgerichtet sind.

14. Verfahren nach Anspruch 13, ferner umfassend das Legen von einer oder mehreren zusätzlichen Schichten (201-203, 301-303, P001-P009) von Verbundwerkstoff, um einen dritten Ausschnitt auf dem zweiten Ausschnitt (312, 507) zu formen; wobei die Schichten (201-203, 301-303, P001-P009) des ersten Ausschnitts (314, 505) Verbundfasern aufweisen, wobei die Schichten des zweiten Ausschnitts (312, 507) und des dritten Ausschnitts jeweils aus einer einzigen Schicht (201-203, 301-303, P001-P009) eines durchgehenden Verbundbands geformt sind, und wobei die Schicht (201-203, 301-303, P001-P009) des dritten Ausschnitts Fasern aufweist, die in einer Richtung ausgerichtet sind, die sich von dem ersten Ausschnitt (314, 505) und dem zweiten Ausschnitt (312, 507) unterscheidet.

15. Verfahren nach Anspruch 6, wenn er direkt oder indirekt von Anspruch 2 abhängt, wobei während des Wickelns ein ausreichender Druck an den gestapelten Schichtaufbau (201-203, 301-303, P001-P009) angelegt wird, um im Wesentlichen Porosität zu entfernen; und wobei während des Aushärtens ein ausreichender Druck innerhalb der Verbundrohrleitung angelegt wird, um die Schichten zu verfestigen.

## Revendications

1. Procédé de formation d'un élément composite multicouche, comprenant les étapes suivantes:
pré-empiler une pluralité de plis (201-203, 301-303, P001-P009) de matériau composite sur une surface plate (220, 420) pour former un ensemble de plis empilés (200, 300, 400, 500, 700, 800);
enrouler l'ensemble de plis empilés (201-203, 301-303, P001-P009) autour d'un mandrin (424, 624, 852) qui présente un axe longitudinal tout en appliquant une pression; et
faire durcir l'ensemble de plis empilés enroulé (201-203, 301-303, P001-P009);
dans lequel des joints (208, 308, 408, 508a-i) entre les plis s'étendent sensiblement parallèlement à l'axe et sont distribués autour de l'ensemble de plis empilés enroulé (201-203, 301-303, P001-P009) pour empêcher le joint (208, 308, 408, 508a-i) entre deux plis quelconques de se trouver au même emplacement angulaire radial que le joint (208, 308, 408, 508a-i) entre deux autres plis quelconques (201-203, 301-303, P001-P009); et
dans lequel l'enroulement de l'ensemble de plis empilés (201-203, 301-303, P001-P009) autour d'un mandrin (424, 624, 852) tout en appliquant une pression comprend l'application d'une pression uniforme en travers du mandrin (424, 624, 852) en utilisant un rouleau supérieur (434, 634) sur un premier côté du mandrin (424, 624, 852) et un rouleau inférieur (436, 636) sur un deuxième côté opposé du mandrin (424, 624, 852), dans lequel les rouleaux supérieur et inférieur (434, 634, 436, 636) sont pressés sur le mandrin (424, 624, 852) avec des ressorts (432), et dans lequel les rouleaux supérieur et inférieur (434, 634, 436, 636) sont utilisables pour appliquer la pression uniforme à l'ensemble de plis empilés enroulé (201-203, 301-303, P001-P009) pendant qu'il s'enroule autour du mandrin (424, 624, 852).

2. Procédé selon la revendication 1, dans lequel le pré-empilement de la pluralité de plis (201-203, 301-303, P001-P009) comprend les étapes suivantes:
poser une pluralité de plis (201-203, 301-303, P001-P009) de matériau composite sur la surface plate (220, 420) pour former un premier détail (314, 505), avec des parties de plis adjacents du premier détail (314, 505) se chevauchant pour former des joints (208, 308, 408, 508a-i);
poser un ou plusieurs pli(s) additionnels (s) de matériau composite pour former un deuxième détail (312, 507) au-dessus du premier détail (314, 505);
appliquer un vide à la pluralité de plis (201-203, 301-303, P001-P009) pour former l'ensemble de plis empilés (201-203, 301-303, P001-P009); et
l'enroulement de l'ensemble de plis empilés (201-203, 301-303, P001-P009) autour d'un mandrin (424, 624, 852) tout en appliquant une pression forme l'élément composite en un tube composite avec une circonférence.

3. Procédé selon la revendication 1 ou 2, comprenant en outre les étapes suivantes:
sélectionner la longueur de chacun de la pluralité de plis (201-203, 301-303, P001-P009) de matériau composite; et
sélectionner l'ordre d'arrangement des plis (201-203, 301-303, P001-P009) pour assurer que, pendant l'enroulement et le durcissement, les joints (208, 308, 408, 508a-i) entre des plis (201-203, 301-303, P001-P009) ne se trouveront pas au même emplacement angulaire radial après que l'ensemble de plis empilés (201-203, 301-303, P001-P009) ait été enroulé.

4. Procédé selon la revendication 1, dans lequel les joints (208, 308, 408, 508a-i) entre des plis sont des joints épissés bout à bout (208, 308, 408, 508a-i).

5. Procédé selon la revendication 1, comprenant en outre l'application d'un vide à l'ensemble de plis empilés (201-203, 301-303, P001-P009).

6. Procédé selon l'une quelconque des revendications précédentes, dans lequel le durcissement de l'ensemble de plis empilés enroulé (201-203, 301-303, P001-P009) comprend les étapes suivantes:
insérer l'ensemble de plis empilés enroulé (201-203, 301-303, P001-P009) dans un moule;
appliquer une pression à l'intérieur de l'ensemble de plis empilés enroulé (201-203, 301-303, P001-P009); et
chauffer l'ensemble de plis empilés enroulé (201-203, 301-303, P001-P009).

7. Procédé selon la revendication 6, dans lequel la pression est appliquée à l'intérieur de l'ensemble de plis empilés enroulé (201-203, 301-303, P001-P009) en utilisant un des moyens suivants: gonfler un ballon à l'intérieur de l'ensemble de plis empilés enroulé (201-203, 301-303, P001-P009), chauffer un tube de silicone à l'intérieur de l'ensemble de plis empilés enroulé (201-203, 301-303, P001-P009), et chauffer un mandrin métallique à l'intérieur de l'ensemble de plis empilés enroulé (201-203, 301-303, P001-P009).

8. Procédé selon l'une quelconque des revendications précédentes, comprenant en outre l'enlèvement du mandrin (424, 624, 852) de l'ensemble de plis empilés enroulé (201-203, 301-303, P001-P009).

9. Procédé selon la revendication 6 ou la revendication 7, dans lequel la pression est appliquée à l'ensemble de plis empilés (201-203, 301-303, P001-P009) pendant l'enroulement autour du mandrin (424, 624, 852) en utilisant un chariot lesté (640) appliqué à un ou plusieurs des rouleaux (434, 634, 436, 636).

10. Procédé selon l'une quelconque des revendications précédentes, dans lequel l'ensemble de plis empilés (201-203, 301-303, P001-P009) est formé de plis (201-203, 301-303, P001-P009) de matériau stratifié pré-imprégné présentant une pluralité d'orientations.

11. Procédé selon l'une quelconque des revendications précédentes, dans lequel le durcissement de l'ensemble de plis empilés enroulé (201-203, 301-303, P001-P009) comprend les étapes suivantes:
insérer l'ensemble de plis empilés enroulé (201-203, 301-303, P001-P009) dans un moule (750, 850);
appliquer une pression à l'intérieur de l'ensemble de plis empilés enroulé (201-203, 301-303, P001-P009) pour presser l'ensemble de plis empilés enroulé (201-203, 301-303, P001-P009) contre le moule (750, 850); et chauffer l'ensemble de plis empilés enroulé (201-203, 301-303, P001-P009), dans lequel le moule (750, 850) est une cuve tubulaire sous pression.

12. Procédé selon la revendication 3, lorsqu'elle dépend de la revendication 2, dans lequel la longueur et l'ordre des plis sont sélectionnés sur la base de la circonférence du tube composite en formation et du changement de la circonférence pendant l'enroulement et le durcissement; et dans lequel l'épaisseur du tube composite est approximativement uniforme.

13. Procédé selon l'une quelconque des revendications précédentes, dépendant directement ou indirectement de la revendication 2, dans lequel les plis (201-203, 301-303, P001-P009) de matériau composite sont formés de matériau stratifié pré-imprégné comprenant des fibres à l'intérieur d'une matrice de résine, les plis (201-203, 301-303, P001-P009) de matériau composite ont chacun une orientation basée sur les fibres à l'intérieur de la résine, les plis (201-203, 301-303, P001-P009) du premier détail (314, 505) sont orientés dans une direction, et les plis du deuxième détail (312, 507) sont orientés dans une autre direction, différente de la direction du premier détail (314, 505); et en option ou de préférence dans lequel la direction du premier détail (314, 505) et la direction du deuxième détail (312, 507) sont orientées approximativement à 45-90° l'une de l'autre.

14. Procédé selon la revendication 13 comprenant en outre la pose d'un ou de plusieurs pli(s) additionnel(s) (201-203, 301-303, P001-P009) de matériau composite pour former un troisième détail au-dessus du deuxième détail (312, 507); dans lequel les plis (201-203, 301-303, P001-P009) du premier détail (314, 505) comprennent un tissu composite; dans lequel les plis du deuxième détail (312, 507) et du troisième détail sont chacun formés d'un pli unique (201-203, 301-303, P001-P009) d'une bande composite continue; et dans lequel le pli (201-203, 301-303, P001-P009) du troisième détail comprend des fibres orientées dans une direction différente du premier détail (314, 505) et du deuxième détail (312, 507).

15. Procédé selon la revendication 6, lorsqu'elle dépend directement ou indirectement de la revendication 2, dans lequel une pression suffisante est appliquée à l'ensemble de plis empilés (201-203, 301-303, P001-P009) pendant l'enroulement pour éliminer sensiblement la porosité; et dans lequel une pression suffisante est appliquée à l'intérieur du tube composite pendant le durcissement afin de consolider les plis.
